# EUROPÄISCHE PATENTSCHRIFT

(11) **EP 3 085 219 B1**
(45) Veröffentlichungstag und Bekanntmachung des Hinweises auf die Patenterteilung: **07.08.2019**
(21) Anmeldenummer: 16401018.3
(22) Anmeldetag: 14.03.2016
(51) Int. Cl.: A01B 73/04

(54) **LANDWIRTSCHAFTLICHES GERÄT**
AGRICULTURAL DEVICE
APPAREIL AGRICOLE

(30) Priorität: 27.03.2015 DE 102015104714
(43) Veröffentlichungstag der Anmeldung: 26.10.2016
(73) Patentinhaber: Amazonen-Werke H. Dreyer GmbH & Co. KG, 49205 Hasbergen (DE)
(72) Erfinder: Scherf, Silvio, 39444 Hecklingen OT Cochstedt (DE); Polster, Joachim, 04229 Leipzig (DE)

(56) Entgegenhaltungen:
- WO-A1-2005/115124
- DE-A1-102012 214 615
- DE-A1-102013 105 254
- US-A1- 2011 284 253

## Beschreibung

Die Erfindung betrifft ein landwirtschaftliches Gerät gemäß dem Oberbegriff des Patentanspruches 1.

Ein derartiges landwirtschaftliches Gerät ist in DE 10 2013 105 254 A1 beschrieben. Dieses Gerät ist als Bodenbearbeitungsgerät zur Bodenbearbeitung ausgebildet. Denkbar ist jedoch auch, dass es zum Ausbringen von Saatgut mit entsprechenden Zusatzeinrichtungen verwendet wird. Das Gerät weist einen Rahmen mit einer Zugdeichsel und einem höhenverstellbaren Laufräder aufweisenden Fahrwerk auf. An dem Rahmen sind zueinander einklappbare und Boden lockernde und/oder Boden einebnende Bodenbearbeitungswerkzeuge aufweisenden Werkzeugeinheiten angeordnet. Hinter diesen am Rahmen angeordneten Bodenbearbeitungswerkzeugen sind ebenfalls zueinander einklappbare Walzeneinheiten von Bodenwalzen angeordnet. Die Laufräder des Fahrwerkes sind hinter den Boden lockernden und/oder Boden einebnenden Bodenbearbeitungswerkzeugen und vor den Laufrädern folgenden Bodenwalzen angeordnet.

Grundsätzlich hat diese Art der Einklappung zum Transport des Gerätes sich in der Praxis bewährt, jedoch wenn die Maschine eine Arbeitsbreite von 9 m erreichen, können die gesetzlich vorgeschriebenen Transportmaße weder in der Höhe noch in der Breite eingehalten werden.

Der Erfindung liegt die Aufgabe zu Grunde, ein einfach aufgebautes Gerät mit einer entsprechenden Aufteilung der zueinander einklappbaren Geräteteile zur Einhaltung der gesetzlich vorgeschriebenen Transportmaße sowohl in der Höhe wie auch in der Breite zu schaffen.

Diese Aufgabe wird erfindungsgemäß dadurch gelöst, dass die vor den Laufrädern des Fahrwerkes angeordneten Bodenbearbeitungswerkzeugeinheiten in drei zueinander klappbare Einheiten und die Walzeneinheiten in vier zueinander klappbare Einheiten aufgeteilt sind, dass die beiden mittleren zueinander einklappbaren und hinter den Laufrädern angeordneten Walzeneinheiten mittels Schwenkgelenken an dem Rahmen im Mittelbereich des Gerätes in verschwenkbarer Weise und die seitlichen Walzeneinheiten jeweils an den davor angeordneten Werkzeugeinheiten mittels Verbindungselementen angeordnet sind.

Infolge dieser Maßnahmen sind die einzelnen Geräteeinheiten so zueinander aufgeteilt, dass ohne aufwändige Zwischenklappvorgänge und/oder Einklappungen die Geräteeinheiten des Gerätes so in Transportstellung gebracht werden können, dass die gesetzlich vorgeschriebenen Transportmaße eingehalten werden. Die Besonderheit liegt also darin, dass die im mittleren Bereich des Gerätes hinter den Laufrädern angeordnete Bodenwalze in zwei zueinander einklappbare Walzeneinheiten aufgeteilt ist. Somit ergibt sich das erfindungsgemäße Konzept, drei Bodenbearbeitungseinheiten und vier Walzeneinheiten, die entsprechend einklappbar sind, zu verwenden.

Um ein einfach aufgebautes und kompaktes ausgestaltetes Gerät zu schaffen, ist vorgesehen, dass die seitlichen Walzeneinheiten eine geringere Arbeitsbreite als die davor angeordneten seitlichen Werkzeugeinheiten aufweisen. Hierdurch ist es möglich, dass die Laufräder des Fahrwerkes an einer optimierten Position des Gerätes unmittelbar hinter den Bodenbearbeitungswerkzeugen und vor den mittleren Walzeneinheiten angeordnet werden können.

Eine weitere Optimierung der Aufteilung der einzelnen Geräteeinheiten für die erfindungsgemäße Einklappung zum Einhalten der gesetzlich vorgeschriebenen Transportmaße bei Maschinen mit großer Arbeitsbreite von bis zu 9 m wird dadurch erreicht, dass die beiden mittleren Walzeneinheiten zusammen eine größere Arbeitsbreite als die mittlere Werkzeugeinheit aufweisen.

Eine äußerst kompakte Ausgestaltung des Gerätes mit einer Arbeitsbreite bis zu 9 m lässt sich dadurch verwirklichen, dass die seitlichen Walzeneinheiten seitlich neben und in zumindest annähender Flucht zu den Laufrädern des Fahrwerks angeordnet sind.

Eine vorteilhafte ein Einklappung und Anordnung der einzelnen aus Werkzeugeinheiten und Walzeneinheiten bestehenden Gerät wird dadurch erreicht, dass die seitlichen Werkzeugeinheiten gemeinsam mit den ihnen zugeordneten und an ihnen mittels Verbindungselementen befestigten Walzeneinheiten in den Bereich vor den Laufrädern und seitlich und/oder oberhalb der mittleren Werkzeugeinheit um 90° aus der zumindest annähernd horizontalen Arbeitsstellung in eine zumindest annähernd vertikale Transportstellung mittels vorzugsweise motorischer Antriebselemente verschwenkbar sind, dass die beiden hinter den Laufrädern des Fahrwerks angeordneten mittleren Walzeneinheiten um 90° aus der zumindest annähernd horizontalen Arbeitsstellung in eine zumindest annähernd vertikale Transportstellung mittels vorzugsweise motorischer Antriebselemente hinter den Laufrädern verschwenkbar sind.

Um in einfacher Weise die Transportbreite weiter optimieren zu können, ist vorgesehen, dass die Bodenbearbeitungswerkzeugeinheiten gegenüber den einschwenkbaren Seitenrahmen und den Mittelrahmen einziehbar, vorzugsweise verschwenkbar angeordnet.

Weitere Einzelheiten der Erfindung sind der Beispielsbeschreibung und den Zeichnungen zu entnehmen. Die Zeichnungen zeigen
- Fig.1: das landwirtschaftliche Gerät in Arbeitsstellung und in perspektivischer Darstellung,
- Fig.2: das landwirtschaftliche Gerät in Arbeitsstellung und in der Ansicht von hinten,
- Fig.3: das landwirtschaftliche Gerät in einer Zwischenposition zum Überführen in die Transportstellung und in perspektivischer Darstellung,
- Fig.4: das landwirtschaftliche Gerät in einer Zwischenposition zum Überführen in die Transportstellung und in der Ansicht von hinten,
- Fig.5: das landwirtschaftliche Gerät in der Transportstellung und in perspektivischer Darstellung und
- Fig.6: das landwirtschaftliche Gerät in der Transportstellung und in der Ansicht von vorn.

Das landwirtschaftliche Gerät 1 ist als Bodenbearbeitungsgerät zur Bodenbearbeitung ausgebildet. Mit entsprechenden Zusatzorganen, Vorratsbehälter mit zugeordneten Dosierorganen und entsprechenden Materialleitungen zu Ausbringelementen, die auch von dem Bodenbearbeitungswerkzeugen des Bodenbearbeitungsgerätes gebildet sein können, kann dieses Gerät auch zum Ausbringen von Saatgut und Düngemitteln aufgerüstet werden.

Das Gerät 1 weist einen Rahmen 2 mit einer Zugdeichsel 3 und einem höhenverstellbaren Laufräder 4 aufweisenden Fahrwerk auf. An dem Rahmen 1 ist vor den Laufrädern 4 im mittleren Bereich der Mittelrahmen 5 und neben diesen auf jeder Seite ein Seitenrahmen 6 mittels Schwenkgelenken 7, deren Schwenkachse 8 jeweils in Fahrtrichtung 9 verläuft, mittels zwischen dem Rahmen 1 oder Mittelrahmen 5 und den Seitenrahmen 6 angeordneten, nicht dargestellten motorischen Antriebselementen, die vorzugsweise als Hydraulikzylinder ausgebildet sind, angeordnet. An dem Mittelrahmen 5 und den Seitenrahmen 6 sind Bodenbearbeitungswerkzeuge 10 aufweisende Werkzeugeinheiten 11 angeordnet. Die Bodenbearbeitungswerkzeuge 10, die an jeweiligem Rahmen 5, 6 angeordnet sind, sind zu Werkzeugeinheiten 11 zusammen gefasst. Im Ausführungsbeispiel sind die Bodenbearbeitungswerkzeuge 10 als Scharscheiben ausgebildet.

An den Seitenrahmen 6 sind hinter den an den Seitenrahmen 6 angeordneten Bodenbearbeitungswerkzeugen 10, die den Boden lockern und/oder Boden einebnen, und seitlich neben den Laufrädern 4 des Fahrwerkes jeweils eine Walzeneinheit 12 angeordnet. Diese seitlichen Walzeneinheiten 12 sind von der Seite gesehen zumindest annähernd in Flucht zu den Laufrädern 4 des Fahrwerks angeordnet. Diese seitlichen Walzeneinheiten 12 weisen eine geringere Arbeitsbreite als die davor angeordneten seitlichen Werkzeugeinheiten 11 auf. Außerdem weisen die beiden mittleren Walzeneinheiten 13 zusammen eine größere Arbeitsbreite als die mittlere Werkzeugeinheit 14 auf.

Hinter den Laufrädern 4 des Fahrwerkes sind im mittleren Bereich des Gerätes 1 die beiden zueinander einklappbaren Walzeneinheiten 13 an dem Rahmen 2 angeordnet. Die beiden mittleren einklappbaren Walzeneinheiten 13 sind mittels Schwenkgelenken, deren Schwenkachsen 15 in Fahrtrichtung 9 verlaufen, am Rahmen 1 ein schwenkbar befestigt und mittels zwischen den mittleren Walzeneinheiten 13 unter dem Rahmen 1 angeordneten, nicht dargestellten motorischen Antriebselementen, die vorzugsweise als Hydraulikzylinder ausgebildet sind, jeweils in ihre Arbeits- und Transportposition verschwenkbar.

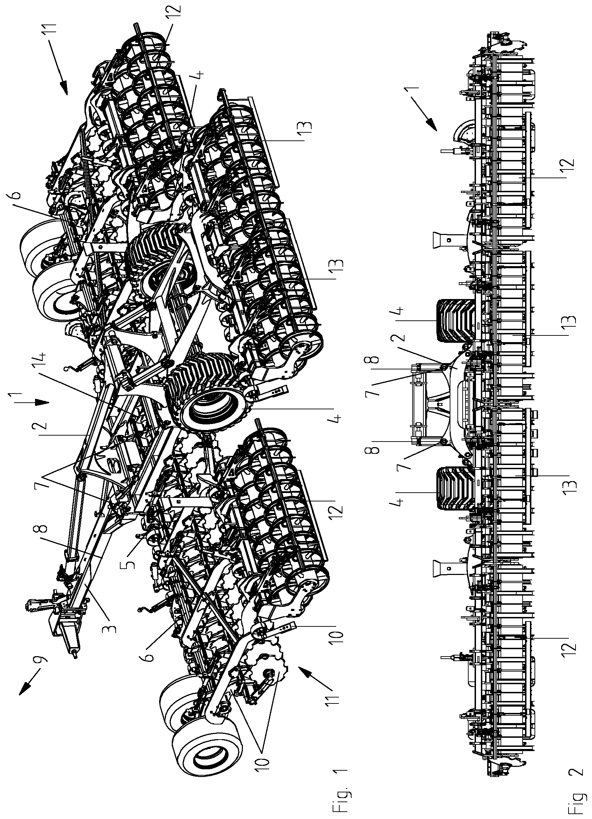

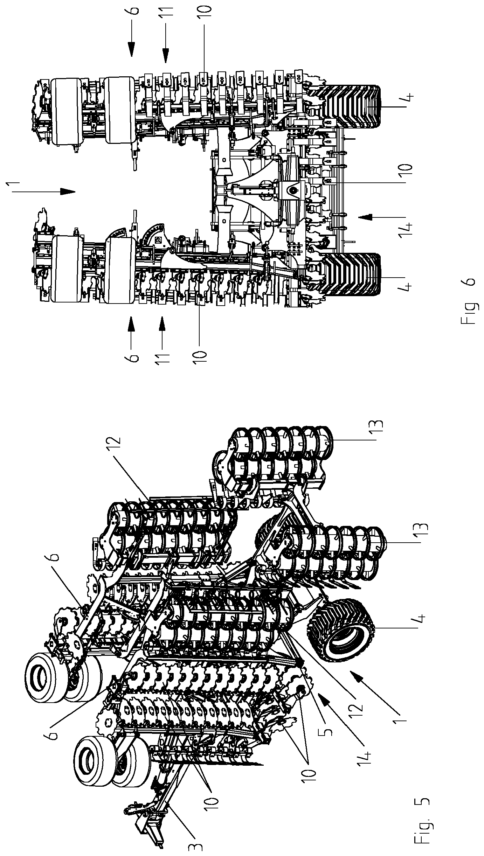

Die seitlichen Werkzeugeinheiten 11 sind gemeinsam mit den ihnen zugeordneten und an ihnen mittels Verbindungselementen befestigten Walzeneinheiten 12 in den Bereich vor den Laufrädern 4 und seitlich und/oder oberhalb der mittleren Werkzeugeinheit 14 um 90° aus der zumindest annähernd horizontalen Arbeitsstellung gemäß Fig. 1 und 2 in eine zumindest annähernd vertikale Transportstellung gemäß Fig. 5 und 6 mittels vorzugsweise, jedoch nicht dargestellter motorischer Antriebselemente verschwenkbar. Die beiden hinter den Laufrädern des Fahrwerks angeordneten mittleren Walzeneinheiten 13 sind um 90° aus der zumindest annähernd horizontalen Arbeitsstellung gemäß Fig. 1 und 2 in eine zumindest annähernd vertikale Transportstellung gemäß Fig. 5 und 6 mittels vorzugsweise, jedoch nicht dargestellten motorischer Antriebselemente hinter den Laufrädern 4 entsprechend verschwenkbar sind.

Die Bodenbearbeitungswerkzeugeinheiten 11, 14 und/oder die Bodenbearbeitungswerkzeuge 10 dieser Einheiten sind gegenüber den einschwenkbaren Seitenrahmen 6 und den Mittelrahmen 5 einziehbar, vorzugsweise verschwenkbar angeordnet. Somit können nach dem Verbringen der Seitenrahmen 6mit den daran angeordneten Bodenbearbeitungswerkzeugen 10 diese noch dichter in Richtung der Maschinenmitte an den Seitenrahmen 6 herangezogen werden. Auch hier kann die Transportbreite somit noch weiter verringert werden.

Vom Grundsatz her ist das Gerät 1 so aufgebaut, dass die vorderen Werkzeugeinheiten 11, 14, d.h. die vor den Laufrädern 4 angeordneten Einheiten, in drei Teilbereiche aufgeteilt sind, während die den Bodenbearbeitungswerkzeugen 10 der Werkzeugeinheiten 11, 14 folgenden Walzeneinheiten 12, 13 in vier Teilbereiche aufgeteilt sind. Hierbei sind die hinter den Laufrädern 4 angeordneten Walzeneinheiten 13 in zwei Teilbereiche, die zueinander in eine Transportstellung gemäß Fig. 5 und 6 einschwenkbar sind, aufgeteilt. Diese beiden mittleren Walzeneinheiten 13 weisen eine größere Arbeitsbreite als die mittlere Werkzeugeinheit 14 vor den Laufrädern 4 auf. Die vier Walzeneinheiten 12 und 13 schließen mit ihren jeweiligen Arbeitsbereichen unmittelbar aneinander an.

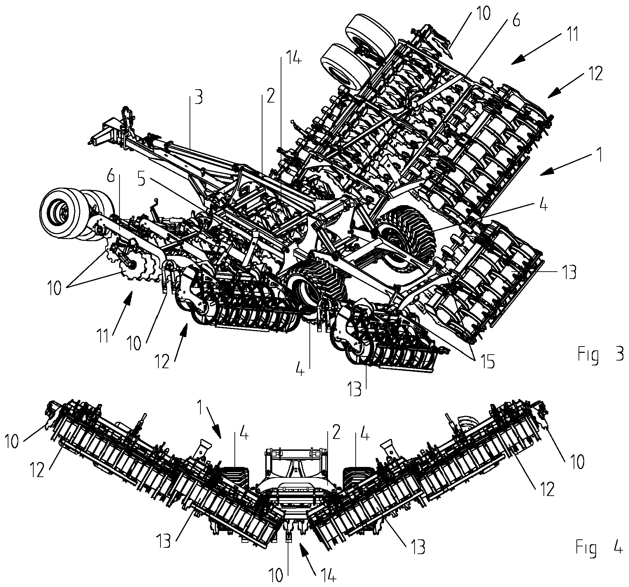

In den Fig.1 und 2 ist das landwirtschaftliche Gerät in Arbeitsposition dargestellt. Um dieses Gerät 1 in die in den Fig. 5 und 6 dargestellte eingeklappte Transportstellung zu erbringen, werden die vorderen seitlichen Bodenbearbeitungseinheiten mit den ihnen zugeordneten äußeren Walzeneinheiten 12 über die in den Fig. 3 und 4 dargestellte Zwischenposition entsprechend verschwenkt. Wie man insbesondere in der Fig.5 erkennt, befinden sich die seitlichen Walzeneinheiten 12 in der Transportposition gemäß Fig. 5 in dem Bereich oberhalb der Laufräder 4. Um dieses zu ermöglichen, ist die Arbeitsbreite der seitlichen Walzeneinheiten 12 geringer als die Arbeitsbreite der vorgeordneten Werkzeugeinheiten 11. Wie weiterhin insbesondere in der Fig.5 zu erkennen ist, befinden sich in der Transportposition die seitlichen Werkzeugeinheiten 11 oberhalb der mittleren Werkzeugeinheit 14.

Das entscheidende Grundprinzip bei dem erfindungsgemäßen Gerät besteht darin, die im vorderen Bereich angeordneten Werkzeugeinheiten 11, 14 in drei Teilbereiche aufzuteilen, während die den Werkzeugeinheiten 11, 14 folgenden Walzeneinheiten 12, 13 in vier Teilbereiche aufgeteilt sind. Zusätzlich sind die seitlichen Walzeneinheiten 12 mit den vorderen seitlichen Werkzeugeinheiten 11 durch die Befestigung an den vorderen seitlichen Werkzeugeinheiten 11 mit diesen gemeinsam einschwenkbar und die beiden mittleren Walzeneinheiten 13 sind separat an dem Rahmen 1 angeordnet und entsprechend in verschwenkbarer Weise zueinander einschwenkbar.

## Patentansprüche

1. Landwirtschaftliches Gerät, insbesondere Bodenbearbeitungsgerät zur Bodenbearbeitung und/oder zum Ausbringen von Saatgut, das einen Rahmen (2) mit einer Zugdeichsel (3) und einem höhenverstellbare Laufräder (4) aufweisenden Fahrwerk und an dem Rahmen (1) angeordnete und in zueinander einklappbare und Boden lockernde und/oder Boden einebnende Bodenbearbeitungswerkzeuge (10) aufweisende Werkzeugeinheiten (11, 14) zusammengefasste Bodenbearbeitungswerkzeuge und hinter diesen am Rahmen (1) angeordnete und in zueinander einklappbare Walzeneinheiten (12, 13) zusammengefasste Bodenwalzen aufweist, wobei die Laufräder (4) des Fahrwerkes hinter den den Boden lockernden und/oder den Boden einebnenden Bodenbearbeitungswerkzeugen (10) und vor den den Laufrädern (4) folgenden Bodenwalzen (12, 13) angeordnet sind, **dadurch gekennzeichnet, dass** die vor den Laufrädern (4) des Fahrwerkes angeordneten Bodenbearbeitungswerkzeugeinheiten (11, 14) in drei zueinander klappbare Einheiten (11, 14) und die Walzeneinheiten (12, 13) in vier zueinander klappbare Einheiten(12, 13) aufgeteilt sind, dass die beiden mittleren zueinander einklappbaren und hinter den Laufrädern (4) angeordneten Walzeneinheiten (13) mittels Schwenkgelenken an dem Rahmen (2) im Mittelbereich des Gerätes (1) in verschwenkbarer Weise und die seitlichen Walzeneinheiten (12) jeweils an den davor angeordneten Werkzeugeinheiten (11) mittels Verbindungselementen angeordnet sind.

2. Gerät nach Anspruch 1, **dadurch gekennzeichnet, dass** die seitlichen Walzeneinheiten (13) eine geringere Arbeitsbreite als die davor angeordneten seitlichen Werkzeugeinheiten (11) aufweisen.

3. Gerät nach zumindest einem der vorstehenden Ansprüche, **dadurch gekennzeichnet, dass** die beiden mittleren Walzeneinheiten (13) zusammen eine größere Arbeitsbreite als die mittlere Werkzeugeinheit (14) aufweisen.

4. Gerät nach zumindest einem der vorstehenden Ansprüche, **dadurch gekennzeichnet, dass** die seitlichen Walzeneinheiten (13) seitlich neben und zumindest annähender Flucht zu den Laufrädern (4) des Fahrwerks angeordnet sind.

5. Gerät nach zumindest einem der vorstehenden Ansprüche, **dadurch gekennzeichnet, dass** die seitlichen Werkzeugeinheiten (11) gemeinsam mit den ihnen zugeordneten und an ihnen mittels Verbindungselementen befestigten Walzeneinheiten (12) in den Bereich vor den Laufrädern (4) und seitlich und/oder oberhalb der mittleren Werkzeugeinheit (14) um 90° aus der zumindest annähernd horizontalen Arbeitsstellung in eine zumindest annähernd vertikale Transportstellung mittels vorzugsweise motorischer Antriebselemente verschwenkbar sind, dass die beiden hinter den Laufrädern (4) des Fahrwerks angeordneten mittleren Walzeneinheiten (13) um 90° aus der zumindest annähernd horizontalen Arbeitsstellung in eine zumindest annähernd vertikale Transportstellung mittels vorzugsweise motorischer Antriebselemente hinter den Laufrädern (4) verschwenkbar sind.

6. Gerät nach zumindest einem der vorstehenden Ansprüche, **dadurch gekennzeichnet, dass** die Bodenbearbeitungswerkzeugeinheiten (11) gegenüber den einschwenkbaren Seitenrahmen (6) und den Mittelrahmen (5) einziehbar, vorzugsweise verschwenkbar angeordnet.

## Claims

1. Agricultural device, in particular soil cultivation device for soil cultivation and/or for dispensing seed, which has a frame (2) with a drawbar (3) and a chassis having height-adjustable wheels (4), and soil cultivation tools that are arranged on the frame (1) and are combined in tool units (11, 14) having soil cultivation tools (10) that are able to be folded in with respect to one another and loosen soil and/or level soil, and ground rollers that are arranged behind said soil cultivation tools on the frame (1) and are combined in roller units (12, 13) that are able to be folded in with respect to one another, wherein the wheels (4) of the chassis are arranged behind the soil cultivation tools (10) that loosen the soil and/or level the soil and in front of the ground rollers (12, 13) that follow the wheels (4), **characterized in that** the soil cultivation tool units (11, 14) arranged in front of the wheels (4) of the chassis are subdivided into three units (11, 14) that are foldable with respect to one another and the roller units (12, 13) are subdivided into four units (12, 13) that are foldable with respect to one another, **in that** the two central roller units (13) that are able to be folded in with respect to one another and are arranged behind the wheels (4) are arranged in a pivotable manner by means of pivot joints on the frame (2) in the central region of the device (1) and the lateral roller units (12) are each arranged on the tool units (11) arranged in front thereof by means of connecting elements.

2. Device according to Claim 1, **characterized in that** the lateral roller units (13) have a smaller working width than the lateral roller units (11) arranged in front thereof.

3. Device according to at least one of the preceding claims, **characterized in that** the two central roller units (13) together have a greater working width than the central tool unit (14).

4. Device according to at least one of the preceding claims, **characterized in that** the lateral roller units (13) are arranged laterally next to and at least approximately aligned with the wheels (4) of the chassis.

5. Device according to at least one of the preceding claims, **characterized in that** the lateral tool units (11), together with the roller units (12) assigned thereto and fastened thereto by means of connecting elements, are pivotable into the region in front of the wheels (4) and to the side of and/or above the central tool unit (14) through 90° out of the at least approximately horizontal working position and into an at least approximately vertical transport position by means of preferably motorized drive elements, **in that** the two central tool units (13) arranged behind the wheels (4) of the chassis are pivotable through 90° out of the at least approximately horizontal working position into an at least approximately vertical transport position by means of preferably motorized drive elements behind the wheels (4).

6. Device according to at least one of the preceding claims, **characterized in that** the soil cultivation tool units (11) are arranged in a retractable, preferably pivotable manner, with respect to the lateral frames (6) that are able to be pivoted in and the central frames (5).

## Revendications

1. Appareil agricole, en particulier appareil de travail du sol pour le travail du sol et/ou le dépôt de semences, qui présente un châssis (2) avec un timon (3) et un train roulant présentant des roues réglables en hauteur (4) et des outils de travail du sol disposés sur le châssis (1) et rassemblés en unités d'outils (11, 14) rabattables l'une vers l'autre et présentant des outils de travail du sol (10) désagrégeant le sol et/ou égalisant le sol et des rouleaux de sol rassemblés en unités de rouleaux (12, 13) disposées derrière celles-ci sur le châssis (1) et rabattables l'une vers l'autre, dans lequel les roues (4) du train roulant sont disposées derrière les outils de travail du sol (10) désagrégeant le sol et/ou égalisant le sol et devant les rouleaux de sol (12, 13) suivant les roues (4), **caractérisé en ce que** les unités d'outils de travail du sol (11, 14) disposées devant les roues (4) du train roulant sont divisées en trois unités (11, 14) rabattables l'une vers l'autre et les unités de rouleaux (12, 13) sont divisées en quatre unités (12, 13) rabattables l'une vers l'autre, **en ce que** les deux unités de rouleaux centrales (13) rabattables l'une vers l'autre et disposées derrière les roues (4) sont disposées de façon pivotante au moyen d'articulations pivotantes sur le châssis (2) dans la région centrale de l'appareil (1) et les unités de rouleaux latérales (12) sont disposées respectivement sur les unités d'outils (11) disposées devant elles au moyen d'éléments d'assemblage.

2. Appareil selon la revendication 1, **caractérisé en ce que** les unités de rouleaux latérales (13) présentent une plus petite largeur de travail que les unités d'outils latérales (11) disposées devant celles-ci.

3. Appareil selon au moins une des revendications précédentes, **caractérisé en ce que** les deux unités de rouleaux centrales (13) présentent ensemble une plus grande largeur de travail que l'unité d'outils centrale (14) .

4. Appareil selon au moins une des revendications précédentes, **caractérisé en ce que** les unités de rouleaux latérales (13) sont disposées latéralement à côté et au moins sensiblement en alignement avec les roues (4) du train roulant.

5. Appareil selon au moins une des revendications précédentes, **caractérisé en ce que** les unités d'outils latérales (11) peuvent pivoter ensemble avec les unités de rouleaux (12) qui leur sont associées et qui leur sont fixées au moyen d'éléments d'assemblage dans la région située devant les roues (4) et latéralement et/ou au-dessus de l'unité d'outil centrale (14) de 90° à partir de la position de travail au moins approximativement horizontale à une position de transport au moins approximativement verticale au moyen d'éléments d'entraînement de préférence motorisés, **en ce que** les deux unités de rouleaux centrales (13) disposées derrière les roues (4) du train roulant peuvent pivoter de 90° à partir de la position de travail au moins approximativement horizontale à une position de transport au moins approximativement verticale au moyen d'éléments d'entraînement de préférence motorisés derrière les roues (4).

6. Appareil selon au moins une des revendications précédentes, **caractérisé en ce que** les unités d'outils de travail du sol (11) sont disposées de façon rétractable, de préférence pivotante, par rapport au châssis latéral rabattable (6) et au châssis central (5) .
